# EUROPEAN PATENT APPLICATION

(11) **EP 4 578 746 A1**
(43) Date of publication of application: **02.07.2025**
(21) Application number: 24222870.8
(22) Date of filing: 23.12.2024
(51) Int. Cl.: B60S 5/04, B60C 25/05

(54) **TYRE INFLATING DEVICE AND METHOD FOR CONTROLLING A TYRE INFLATING PROCESS**

(30) Priority: 29.12.2023 IT 202300028359
(71) Applicant: NEXION S.p.A., 42015 Correggio (RE) (IT)
(72) Inventor: DE VUONO, Antonio, 43123 PARMA (IT)
(74) Representative: Conti, Marco

(57) **Abstract**

A tyre inflating device (100) comprises an air feed line (200), an inflating module (300), including a primary valve (301) movable between a closed position and an open position for closing and opening the feed line (200) and an auxiliary safety module (700), including a secondary valve (500), movable between a closed position and an open position for closing and opening the feed line (200); a pressure sensor (600), configured to detect a pressure value downstream of the inflating module (300) and a control unit (800) programmed to control the secondary valve (500) as a function of the pressure value detected by the pressure sensor (600).

## Description

This invention relates to a tyre inflating device and to a method for controlling a tyre inflating process.

At the present time, prior art devices used to inflate tyres are provided with an air feed line configured to feed air under pressure from a pressurized air source to the tyre. An example of such a device is described in document IT202016000083023. This device allows tyres to be inflated while checking that the pressure does not exceed a predetermined safety threshold. Another example of an inflating device is described in patent document US4872492A.

Patent documents 102021000005957 and EP2746068B1 describe an inflating device comprising an inflating module and a safety module; the safety module has the function of coming into operation if the inflating module is not deactivated correctly for any reason when the pressure exceeds the predetermined safety threshold.

In particular, the safety modules described in these documents are composed of pneumatic circuits. Consequently, besides being relatively unsafe and difficult to repair in the event of a fault, they are not very adaptable to different conditions and inflating requirements.

Therefore, there continues to be a need for an inflating system having a safety module which is more robust and reliable and at once flexible.

Patent documents IT20210005957A1, US2022/063570A1 and WO01/76922A1 also disclose inflating devices; however, none of those documents adequately meet the market's needs.

This disclosure therefore has for an aim to provide a tyre inflating device and a method for controlling a tyre inflating process to overcome the above mentioned disadvantages of the prior art.

In particular, the aim of this disclosure is to provide a tyre inflating device which is simple in construction and inexpensive.

Another aim of this disclosure is to provide a tyre inflating device which is safe and also adaptable to different conditions.

The technical purpose and aims specified are achieved by a tyre inflating device and a method for controlling a tyre inflating process, comprising the technical features set out in one or more of the accompanying claims.

This disclosure regards a tyre inflating device. The inflating device may form part of wheel or vehicle service equipment (for example, tyre changers, balancing machines and even vehicle lifts). In an embodiment, the inflating device is for a tyre changing apparatus; in this context, this disclosure also regards a tyre changing apparatus comprising the inflating device.

The inflating device comprises an air feed line which allows air to flow from an air feed source to the tyre, and an inflating module which is operatively interposed between the feed source and the tyre.

The air feed source may be configured to supply air at a feed pressure. For example, the feed pressure may be between 8 and 10 bar.

The inflating device (or module) comprises a primary valve, located on the air feed line and movable between a closed position, where it prevents air from flowing into the tyre, and an open position, where it allows air to flow in.

In this disclosure, it is understood that the direction of flow in the feed line is from the (pressurized air) feed source to the tyre; therefore, the expressions "upstream" and "downstream" used hereinafter refer to this direction of flow of the air in the feed line. The inflating module comprises a first branch. The first branch extends from the feed line. The first branch extends at a point upstream or downstream of the primary valve in the inflating direction. Preferably, it extends at a point upstream of the primary valve in the inflating direction.

The inflating module comprises a shutoff valve. The shutoff valve may be located on the first branch. The shutoff valve is movable between a closed position and an open position, to connect the first branch to the primary valve, to switch it between the open position and the closed position.

The inflating module comprises a control leg which allows air to be fed to the shutoff valve from a point in the feed line. The supply of air switches the shutoff valve from the open position to the closed position responsive to the pressure exceeding a predetermined value.

In an embodiment, the inflating module comprises a relief duct, extending from the first branch. The relief duct is configured to discharge air gradually to the outside atmosphere, with the shutoff valve at the closed position.

In an example embodiment, the inflating module comprises a second branch. The second branch extends from the air feed line, preferably, at a point upstream of the primary valve in the inflating direction. The first branch may extend from the air feed line at a point upstream of the primary valve in the inflating direction. Thus, the shutoff valve may be located on the first branch or on the second branch. The shutoff valve may be movable between a closed position and an open position, to connect the first branch or the second branch to the primary valve, to switch it between the open position and the closed position. In such a case, the control leg may be configured to allow air to be fed to the shutoff valve from a point in the feed line downstream of the primary valve in the inflating direction.

In an embodiment, the inflating module may be made according to what is described in patent document US4872492A, which is incorporated herein by reference.

In an embodiment, the inflating device (or module) also comprises a first cylinder and a second cylinder, both connected to the primary valve. The first cylinder and the second cylinder are in opposition to each other, so that when the first cylinder prevails over the second, the primary valve is at the open position and, vice versa, when the second cylinder prevails over the first, the primary valve is at the closed position.

The first cylinder may be fed by a first branch which is connected by a shutoff valve to the air feed line at a point upstream of the primary valve.

The second cylinder may be fed by a second branch, extending from the air feed line at a point upstream of the primary valve.

The inflating device (or module) is configured to interrupt air feed to the first cylinder when the pressure downstream of the primary valve (of the tyre) exceeds a predetermined pressure value.

In an example embodiment, the second cylinder is fed (with the air from the air feed source) all the time.

Preferably, the inflating device (or module) is configured to allow the first cylinder to prevail over the second when both the first and the second cylinder are being fed (connected to the air feed line). For example, the second cylinder has a working cross section that is smaller than the corresponding working cross section of the first cylinder.

In an example embodiment, the inflating device (or module) includes a shutoff valve, located on the first branch and movable between a closed position, where it occludes the first branch to prevent fluid communication between the feed line and the first cylinder, and an open position, where it allows fluid communication. The inflating device (or module) also includes a control leg which allows air (or fluid) to be fed to the shutoff valve from a point in the feed line downstream of the primary valve. The inflating device (or module) is configured in such a way that the feeding of air (or fluid) switches the shutoff valve from the open position to the closed position in response to the predetermined pressure value being exceeded.

The inflating device (or module) also includes a relief duct, extending from the first branch between the shutoff valve and the first cylinder and configured to gradually discharge air from the first cylinder to the outside atmosphere when the shutoff valve is closed.

With regard to the inflating devices, there is a need to reduce tyre inflation time. In the inflating devices, the inflating module is configured to apply pressure intermittently so as to determine an inflation cycle. In the inflation cycle, active stretches, where the tyre receives air, are alternated with passive stretches, where inflation is interrupted and the tyre does not receive air, so as to allow a reliable and accurate reading of the tyre pressure to be taken. Applying the pressure intermittently, however, results in a loss of efficiency and thus tyre inflation times increase. Thus, to reduce inflation times, the inflating module of this disclosure can be made in accordance with two embodiments; in a first embodiment, a tank made according to what is described in patent document EP2746068B1, incorporated herein by reference, is used; in a second embodiment, a relief duct which is partly occluded (in particular, by a plurality of throttles positioned in series in the relief duct, or by a constrictive member positioned in the relief duct), as described in patent document 102021000005957 which is incorporated herein by reference and to which the reader is referred for a detailed and in-depth description of this aspect. According to a further aspect of this disclosure, the inflating device comprises an auxiliary safety module. The auxiliary safety module has the function of coming into operation if the inflating module is not deactivated correctly when the inflating pressure exceeds the safety threshold.

In an embodiment, the auxiliary safety module comprises a secondary valve, located on the air feed line downstream of the inflating module (downstream of the primary valve). The secondary valve is movable between a closed position and an open position. At the closed position, it prevents air from flowing in the feed line between the inflating module and the tyre. At the open position, it allows air to flow from the inflating module to the tyre (so as to inflate the tyre).

In an example, the inflating device (in particular, the auxiliary safety module) comprises a pressure sensor. The pressure sensor is configured to detect a pressure value downstream of the inflating module.

The inflating device (in particular, the auxiliary safety module) may comprise a control unit, including a memory and a processor. The control unit may be programmed to control the secondary valve as a function of the pressure value detected by the pressure sensor.

Use of the control unit to drive the closing and opening of the valve makes inflating the tyre safe and potentially adaptable to a variety of inflation requirements.

In an embodiment, the control unit is programmed to control the secondary valve, as a function of an inflation cycle. The inflating device (or the inflating module) is configured for inflating the tyre, in particular according to an inflation cycle. In particular, the control unit may be programmed to control the secondary valve as a function of a progression (or trend) of an inflation cycle. In the inflation cycle, the pressure can have a periodic behaviour (or quasi-periodic). Therefore, the control unit may be programmed to control the secondary valve as a function of a progression of an inflation cycle, wherein, in the inflation cycle, the pressure has a period behaviour. Specifically, the inflating device may be configured for inflating a tyre according to an inflation cycle and the control unit may be programmed to control the secondary valve as a function of the inflation cycle (more specifically, as a function of a progression of the inflation cycle).

In an embodiment, the inflating module is configured to apply pressure intermittently, so as to determine an inflation cycle. In particular, in the inflation cycle, there are active stretches, where the air feed line is open, alternated with passive stretches, where the air feed line is interrupted. In particular, in the active stretches, the tyre receives air, and in the passive stretches, the tyre does not receive air. In the passive stretches, air feed to the tyre is interrupted so as to allow a pressure reading to be taken. In the inflation cycle, the trend of the pressure reading is periodic (or quasi-periodic); thus, the trend of the pressure reading has a cycle time (that is, a cycle period).

In the inflation cycle, the pressure detected may vary up to a maximum pressure, for example, equal to the pressure of the air supplied by the feed source (that is, equal to the feed pressure).

It should be noted that the inflating module is configured to supply pressurized air to the tyre until the pressure in the tyre reaches a target pressure value.

Thus, in a tyre inflation cycle, active cycles are alternated with passive cycles, with pressure minimums in between. Since the tyre receives air from the inflating circuit each time the air feed line is opened, the pressure inside the tyre increases and so the subsequent pressure minimums tend towards the target pressure value. Once the minimum pressure has reached the target pressure value, tyre inflation is automatically stopped. In an embodiment, the target pressure value is settable between an intermediate target pressure value and a final target pressure value, greater than the intermediate target pressure value (for example, the intermediate target pressure value may be set to 1 bar relative to the pressure of the air already in the tyre). Thus, by setting the intermediate target value, the tyre is inflated (partly) in an initial step; next, the tyre can be inflated to a final target pressure value in a final step (carried out by the same inflating device or by a different inflating device in the same place or in a different place). Alternatively, the tyre can be inflated to a final target pressure value in a single step. It should be noted that the initial step of inflating to the intermediate target value is carried out so that one of the tyre beads positions itself beyond a circular rim zone which is adapted to receive it when the tyre is correctly mounted and which is located between the rim groove and the rim flange.

It should be noted that the intermediate target pressure value is lower than the final target pressure value; thus, by setting the intermediate target value, the tyre is inflated partly. Next, for safety reasons, the tyre can be inflated to the final target value in a different, safer place, for example, inside an inflation cage.

The memory may include a reference time value.

In an embodiment, the control unit may be programmed to control the secondary valve as a function of the inflation cycle trend (that is, of the pressure trend in the inflation cycle). In particular, the control unit may be programmed to control the secondary valve as a function of the reference time. For example, the control unit may be programmed to compare the cycle time with the reference time value and to control the secondary valve responsive to the comparison. Preferably, for a cycle time greater than the reference time value, the control unit is programmed to switch the secondary valve to the closed position so as to prevent air from passing.

During the inflation cycle, the pressure cyclically adopts a minimum value. Thus, in an embodiment, the control unit processes the detected pressure values so as to find the instant in the cycle at which the pressure adopts the minimum value or, generally speaking, to identify a descending stretch of the trend of the pressure detected by the pressure sensor. Thus, the control unit may be programmed to control the secondary valve as a function of the minimum pressure values detected. In addition or alternatively, since the pressure trend is cyclic, the control unit may process the detected pressure values to find the instant in the cycle at which the pressure adopts the maximum values and thus to control the secondary valve as a function of the maximum pressure values.

In particular, the inflating device (in particular, the auxiliary safety module) may comprise a counter. The counter may be configured to count up to a time equal to the reference time value. The control unit may be programmed to switch the secondary valve to the closed position responsive to reaching the reference time. The counter may be configured to reset the count each time the control unit recognizes the minimum pressure value (or the descending pressure stretch) within the inflation cycle. The fact that the control unit switches the secondary valve to the closed position when a time equal to the reference time value is reached means that tyre inflation is interrupted if inflation is blocked for any reason. Thus, if the pressure detected exceeds a threshold value for a length of time greater than the reference time, the control unit switches the secondary valve to the closed position.

In particular, the control unit may be programmed to receive the pressure value detected by the pressure sensor and to compare it with a control pressure value, that is, a reference pressure value for finding the minimum. Responsive to detecting a pressure value lower than the control pressure value, the control unit may be programmed to compare a pressure value Pₙ, detected at a given instant with a pressure value Pₙ₋₁, detected at a preceding instant. For each pressure value Pₙ which is less than the pressure value Pₙ₋₁, the control unit may be programmed to derive the passive (or negative or descending) stretches of the pressure detected. The control unit may be programmed to derive the minimum pressure value responsive to a pressure value Pₙ which is greater than Pₙ₋₁. For each pressure value Pₙ which is greater than the pressure value Pₙ₋₁, the control unit may be programmed to derive the active (or positive or ascending) stretches of the pressure detected. Thus, the control unit recognizes the minimum pressure values between the active stretches and the passive stretches of the pressure trend. It should be noted that the control unit starts searching for the minimum when the pressure detected is less than the control pressure; for this purpose, the control pressure value is suitably chosen so it is greater than the minimum pressure value to a sufficient extent (so as to ensure that there effectively is a pressure minimum between the values Pₙ and Pₙ₋₁) but not too high (so as not to waste computing power). For example, the control pressure value may be set to at least double the target pressure.

In an example, the control unit may be programmed to derive a cycle time (from the trend of the inflation cycle) and to set the reference time value as a function of the cycle time derived. For example, the control unit may be programmed to derive a cycle time of the pressure trend in a configuration time interval; in the configuration time interval, the inflation cycle (that is, the pressure trend of the inflation cycle) has a plurality of active stretches and passive stretches. The control unit may set the reference time value as a function of the cycle time derived; in particular, the control unit may set the reference time value to be equal to the cycle time derived. In a monitoring time interval, in which the inflation cycle (that is, the pressure trend of the inflation cycle) has a plurality of active stretches and passive stretches, the control unit may be programmed to compare a cycle time of the pressure trend in the monitoring time interval with the set reference time value, and to control the secondary valve as a function of the comparison. In particular, the monitoring time follows the configuration time.

In an embodiment, the control unit has an electrically powered configuration and an electrically unpowered one and, responsive to the switching between the unpowered configuration and the powered configuration, is programmed to command the secondary valve to open and close a plurality of times in succession. That way, it is possible to check the secondary valve for correct switching - for example, through a secondary valve activation and deactivation noise - before starting the tyre inflation cycle. In particular, there may be a variety of valve types. In one or more examples, the secondary valve emits a sound.

The pressure sensor is located upstream of the secondary valve. Preferably, the secondary valve is normally closed. Thus, the control unit is configured to switch the secondary valve from the closed configuration to the open configuration.

In particular, the secondary valve may be an electrovalve or an electropneumatic valve. The electrovalve comprises a coil which is energizable by electric current, a spring and an internal member adapted to connect the electrovalve ducts. Thus, the coil is configured to be traversed by an electric current so as to generate a magnetic field; the magnetic field overcomes the force exerted by the spring and displaces the internal member. In the embodiment illustrated in the drawings, when the coil is traversed by current, the electrovalve is in the open configuration; when the coil is not traversed by current (in an unpowered condition), the electrovalve is in the closed configuration. Thus, under normal conditions, the fact that the secondary is in the closed configuration, preventing air from flowing from the air source to the tyre, makes the system even more safe; in effect, even in the case of electrical power failures, the electrovalve remains closed because it does not receive current.

In an embodiment, the inflating device comprises a distribution valve. The distribution valve may be operable to allow or prevent air flow from the inflating module to the tyre. The distribution valve includes, for example, a pedal or other control element. Preferably, the distribution valve is located on the feed line downstream of the inflating module; for example, the distribution valve is located on the feed line downstream of the inflating module and upstream of the secondary valve (in such a case, going from the pressurized air source to the tyre, we have the primary valve, the distribution valve and the secondary valve, in that order). Alternatively, the distribution valve might be located upstream of the inflating module (along the feed line).

In an embodiment, the control unit is programmed to detect switching of the line between an interrupted condition, in which the distribution valve is closed and interrupts the line between the air feed source and the pressure sensor, and an open condition, in which the distribution valve is open and puts the air feed source in communication with the pressure sensor, and is programmed to move the secondary valve from the closed position to the open position responsive to such switching.

The control unit may have an operational configuration and an intervention configuration. In the intervention configuration, it moves the secondary valve to the closed position. In the operational configuration, the control unit does not act on the secondary valve. Preferably, the control unit is configured to remain in the intervention configuration until a reset signal is generated.

Responsive to receiving a reset signal, the control unit switches to the intervention configuration so as to reset the safety module. In an example, the inflating device comprises a pushbutton, configured to generate the reset signal. The pushbutton may be operable by an operator.

The inflating device may comprise an indicator. The indicator may be configured to indicate a state of the control unit, distinguishing between the operational configuration and the intervention configuration. In addition, the indicator may be configured to indicate a state of the air feed source and/or of the detected pressure value. The indicator may comprise one or more LEDs or a display (for example, a touchscreen). In an embodiment, the reset signal may be generated by interacting with the display (for example, by touching the touchscreen).

This disclosure also provides a method for inflating a tyre, in particular (but not exclusively) in a tyre changing apparatus.

According to an aspect, this disclosure provides a method for controlling a tyre inflating process, in particular (but not exclusively) in a tyre changing apparatus.

Inflation is carried out by an inflating device, for example, according to one or more of the features described in this disclosure with regard to the inflating device.

The method comprises a step of (preparing for) connecting the feed line to the source of air (that is, the pressurized air source).

The method comprises a step of feeding air, for example, through the first branch and/or through the second branch. That way, the primary valve is set at the open position.

In an embodiment, the inflating module comprises a first cylinder, connected to the primary valve in order to cause the valve to open and supplied by a first branch of the air feed line, and a second cylinder, connected to the primary valve in order to cause the valve to close and supplied by a second branch of the air feed line. In this case, the method may include a step of feeding air to the first cylinder, for example, through the first branch, and to the second cylinder, for example, through the second branch.

The method comprises a step of feeding air to the shutoff valve, for example, through the control leg.

The method comprises a step of measuring the pressure value of the air entering the tyre.

The method also comprises a step of comparing (with mechanical/pneumatic or electronic or other means) the measured pressure value with a predetermined pressure value.

The method also comprises a step of driving the shutoff valve between the open position and the closed position in response to this comparison. Thus, if the measured pressure value is greater than the predetermined pressure value, the shutoff valve is switched from the open position to the closed position.

The method comprises a step of continuing to feed air to the second cylinder to switch the primary valve from the open position to the closed position. That way, air feed to the tyre is interrupted.

In an embodiment, the method comprises a step of discharging air to an outside atmosphere through an air passage in the relief duct. In an example, the air is discharged to the outside atmosphere from the first cylinder; this condition occurs when the first cylinder is not being fed because the shutoff valve is closed.

The method comprises a step of detecting a pressure value, preferably downstream of the inflating module, via the pressure sensor.

The method comprises a step of driving the secondary valve via the control unit, preferably as a function of the pressure value detected by the pressure sensor.

According to another aspect of this disclosure, where the inflating device further comprises an auxiliary safety module (comprising a secondary valve according to one or more of the features described in this disclosure), the method comprises a step of interrupting air feed to the tyre by closing the secondary valve; in an example embodiment, the secondary valve is closed responsive to a trend of the pressure detected.

In an embodiment, the method comprises a step of driving, by the control unit, the secondary valve, as a function of an inflation cycle. The method can comprise a step of inflating, by the inflating device (or the inflating module), of the tyre, in particular according to an inflation cycle. In particular, the control unit may drive the secondary valve as a function of a trend of an inflating cycle. In the inflation cycle, the pressure can have a period behaviour (or quasi-periodic). Therefore, the control unit may drive the secondary valve as a function of a trend of an inflating cycle, wherein, in the inflation cycle, the pressure has a periodic behaviour. Specifically, the method can have a step of inflating the tyre according to an inflation cycle by the inflating device and a step, by the control unit, of driving the secondary valve as a function of the inflation cycle (more specifically, as a function of a trend of the inflation cycle).

In an example, the method comprises a step of applying pressure intermittently (via the inflating module), so as to determine an inflation cycle. In particular, in the inflation cycle, there are active stretches, where the air feed line is open, alternated with passive stretches, where the air feed line is interrupted.

The method may comprise a step of driving the secondary valve via the control unit as a function of the trend of the inflation cycle; possibly also as a function of a reference time, preferably contained in the memory of the control unit.

For example, the method may comprise a step of comparing the cycle time with the reference time value and, responsive to the comparison, there may be a step of driving the secondary valve via the control unit. In particular, for a cycle time which is greater than the reference time value, the control unit switches the secondary valve to the closed position so as to prevent air from passing.

In particular, during the inflation cycle, the pressure cyclically adopts a minimum (relative minimum) value. More specifically, the pressure cyclically adopts a descending stretch and a minimum (relative minimum) value. Thus, in an embodiment, the method includes a step of processing the detected pressure values via the control unit in order to find the instant in the cycle at which the pressure adopts the minimum value (in particular, in which the pressure drops and adopts the minimum value). In particular, the method may comprise a step, via a counter, of counting up to a time equal to the reference time value. The method may comprise a step, on reaching the reference time, of switching the secondary valve via the control unit. The method may comprise a step of resetting the count, via the counter, each time the control unit finds the minimum pressure value in the inflation cycle.

In an embodiment, the method comprises a step of receiving the pressure value detected by the pressure sensor. The method may comprise a step, via the control unit, of comparing the detected pressure value with a control pressure value, that is, a reference pressure value for finding the minimum. Responsive to detecting a pressure value which is less than the control pressure value, the control unit may be programmed to compare a pressure value Pₙ, detected at a given instant with a pressure value Pₙ₋₁, detected at a preceding instant. For each pressure value Pₙ which is less than the pressure value Pₙ₋₁, the control unit determines the passive (or negative or descending) stretches of the pressure detected. Responsive to a pressure value Pₙ which is greater than Pₙ₋₁, the method may comprise a step of deriving the minimum pressure value. For each pressure value Pₙ which is greater than the pressure value Pₙ₋₁, the method may comprise a step of determining the active (or positive or ascending) stretches of the pressure detected.

In an example embodiment, the control unit derives the cycle time and sets the reference time value as a function of the cycle time derived. These and other features will become more apparent from the following description of a preferred embodiment, illustrated by way of non-limiting example in the accompanying drawings, in which:
- Figures 1A and 1B schematically represent two possible embodiments of the inflating device according to one or more aspects of this disclosure;
- Figures 2A and 2B show the trend of the pressure in an inflation cycle performed by the inflating device according to one or more aspects of this disclosure;
- Figures 3A and 3B show a flow diagram representing the operation of an inflating device according to one or more aspects of this disclosure.

With reference to the accompanying drawings, the numeral 100 denotes an inflating device for inflating a tyre P.

The inflating device 100 comprises an air feed line 200 configured to allow air to flow from an air feed source F to the tyre P, and an inflating module 300 which is operatively interposed between the feed source F and the tyre P.

The term "air feed source F" is used to mean a source of pressurized fluid (for example, air), such as a compressor or the like. The air feed source F is configured to supply air at a feed pressure Pₐ. For example, the feed pressure Pₐ may be between 8 and 10 bar.

The inflating module 300 comprises a primary valve 301, located on the air feed line 200 and movable between a closed position, where it prevents air from flowing through the feed line 200 into the tyre P, and an open position, where it allows the air to flow.

The inflating module 300 also comprises a first cylinder 302a which is operatively connected to the primary valve 301 and which is fed by a first branch 201a extending from the air feed line 200 at a point upstream of the primary valve 301. The first cylinder 302a is configured to cause the primary valve 301 to open to allow air to flow from the feed source F towards the tyre P.

As shown in the accompanying drawings, the inflating module 300 of the embodiment illustrated also comprises a second cylinder 302b which is operatively connected to the primary valve 301 and which is fed by a second branch 201b extending from the air feed line 200 at a point upstream of the primary valve 301. The second cylinder 302b is configured to cause the primary valve 301 to close to interrupt the flow of air towards the tyre P.

According to this disclosure, the first cylinder 302a and the second cylinder 302b are positioned opposite each other relative to the air feed line 200 and differ from each other in volume. More specifically, the first cylinder 302a is larger in volume than the second cylinder 302b.

Therefore, when the first cylinder 302a is fed by the first branch 201a, the primary valve 301 is pushed towards the open position; conversely, when (only) the second cylinder 302b is fed by the second branch 201b, the primary valve 301 is pushed towards the closed position. If both cylinders 302a, 302b are fed simultaneously by the respective branches 201a, 201b, the primary valve 301, because of the larger volume of the first cylinder is 302a, is moved to the open position, as described in more detail below.

In other words, the first and second branches 201a, 201b feed air to the first and second cylinders 302a, 302b, respectively, so as to cause the primary valve 301 to move and, consequently, to allow or interrupt air feed to the tyre P.

The inflating module 300 also comprises a shutoff valve 303, located on the first branch 201a and movable between a closed position, where it occludes the first branch 201a to prevent fluid communication between the first cylinder 302a and the feed line 200, and an open position, where it allows fluid communication.

The inflating module 300 also comprises a control leg 202 configured to allow air to be fed to the shutoff valve 303 from a point in the feed line 200 downstream of the primary valve 301. This supply of air switches the shutoff valve 303 from the open position to the closed position when a predetermined pressure value is exceeded.

Looking in more detail, the shutoff valve 303 is a calibratable valve - that is to say, a valve whose opening and closing can be regulated based on the value of the pressure of the air flowing into the valve. Since the air entering the shutoff valve 303 is the same that flows in the feed line 200 downstream of the primary valve 301 to inflate the tyre P, the pressure value at which the shutoff valve 303 is calibrated is the target pressure value for inflating the tyre P.

As shown in the accompanying drawings, the shutoff valve 303 comprises a spring, configured to allow the shutoff valve 303 to be regulated, and a flow chamber in which a stem of the shutoff valve 303 is slidably movable. In this situation, the shutoff valve 303 is in fluid communication with the control leg 202 through the flow chamber so that when the air is channelled from the feed line 200 into the control leg 202, it feeds the flow chamber. If the pressure of the air being channelled overcomes the resistance of the spring, meaning that it is greater than the predetermined pressure, the shutoff valve 303 is switched to the closed position, thus interrupting feed along the first branch 201a.

In other words, when the pressure of the air channelled in the control leg 202 exceeds the predetermined pressure value, the resistance of the spring is overcome and the shutoff valve 303 is closed, thus preventing air from being fed from the feed line 200 to the first cylinder 302a through the first branch 201a.

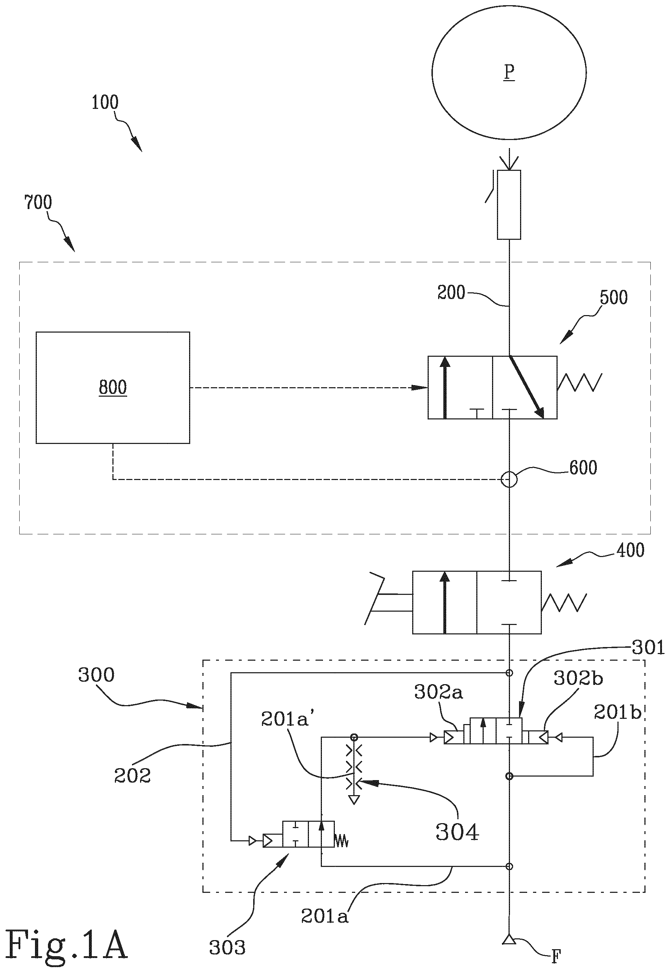

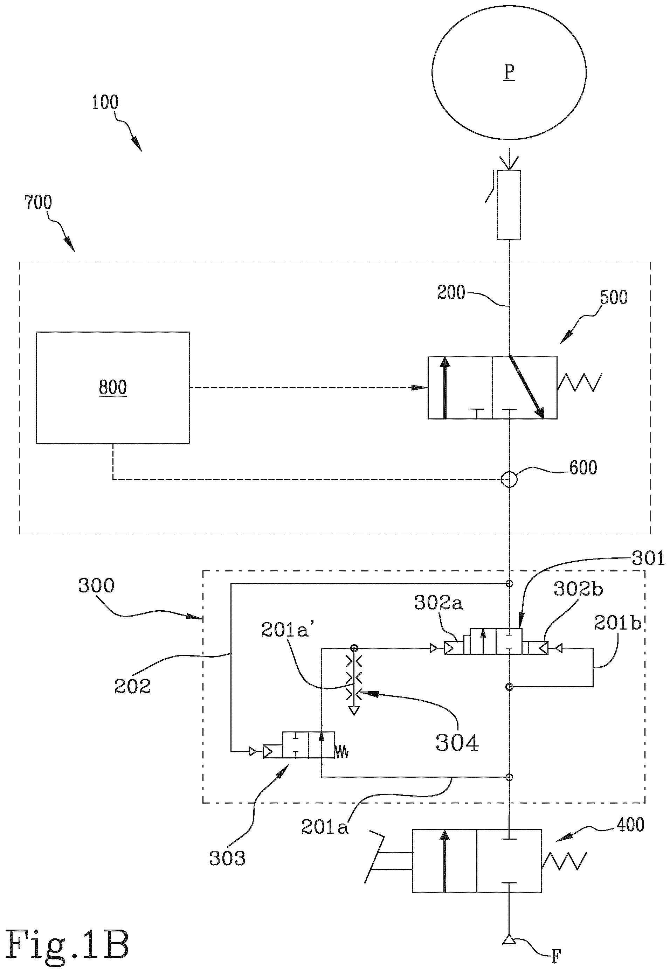

According to this disclosure, the inflating module 300 also comprises a relief duct 201a', extending from the first branch 201a between the shutoff valve 303 and the first cylinder 302a and configured to gradually discharge air from the first cylinder 302a to the outside atmosphere when the shutoff valve 303 is closed. Figures 1A and 1B show, by way of example, a relief duct 201a' having a plurality of throttles 304 having the purpose of slowing the discharge of air from the first cylinder 302a to the outside atmosphere. Instead of the plurality of throttles 304, however, a single throttle or a constrictive member located in the relief duct 201a' might be provided.

In use, the moment the shutoff valve 303 is switched from the open position to the closed position, the air supply fed by the first branch 201a to the first cylinder 302a is interrupted. In this situation, the pressurized air continues to be fed to the second cylinder 302b through the second branch 201b, while the air contained in the first cylinder 302a, which is no longer being fed, is gradually discharged through the relief duct 201a'. While the first cylinder 302a is being emptied, the air feed line 200 is still in fluid communication with the tyre P, which thus continues to be filled with air. This condition lasts until the pressure applied by the second cylinder 302b is greater than that applied by the first cylinder 302a. In this situation, the second cylinder 302b switches the primary valve 301 from the open position to the closed position, thus interrupting air feed to the tyre P through the air feed line 200.

In effect, while the first cylinder 302a is being emptied, to increase the charging time (that is, the time in which the tyre P remains in fluid communication with the air feed line 200 following closure of the shutoff valve 303) or to reduce the predetermined pressure value at which the shutoff valve 303 closes, it is important that the time to empty the first cylinder 302a while the primary valve 301 is still at the open position is increased.

In use, therefore, once the shutoff valve 303 is closed, the air in the first cylinder 302a starts being discharged in gradual, controlled manner through the relief duct 201a, while the primary valve 301 is still open to allow inflating the tyre P. In this situation, the plurality of throttles 304 or the constrictive member has the effect of prolonging the time the air is discharged from the relief duct 201a, thereby preventing the primary valve 301 from closing and thus feed to the tyre P from being interrupted. The tyre P therefore continues to be fed until the pressure applied by the second cylinder 302b is greater than that applied by the first cylinder 302a. In this situation, the second cylinder 302b switches the primary valve 301 from the open position to the closed position, thus interrupting air feed to the tyre P through the air feed line 200.

Consequently, downstream of the primary valve 301 and in the control leg 202, the pressure falls until reaching a value lower than the predetermined threshold value. In this situation, the air flow in the control leg 202 is no longer able to overcome the resistance of the spring and the shutoff valve 303 is thus switched from the closed to the open position again so as to allow air to flow in the first branch 201a to the first cylinder 302a.

Once air feed through the first branch 201a is resumed, the first cylinder 302a, since it is larger in surface area than the second cylinder 302b, is able to overcome the resistance of the second cylinder 302b and to switch the primary valve 301 from the closed to the open position so as to allow air to pass through towards the tyre P again.

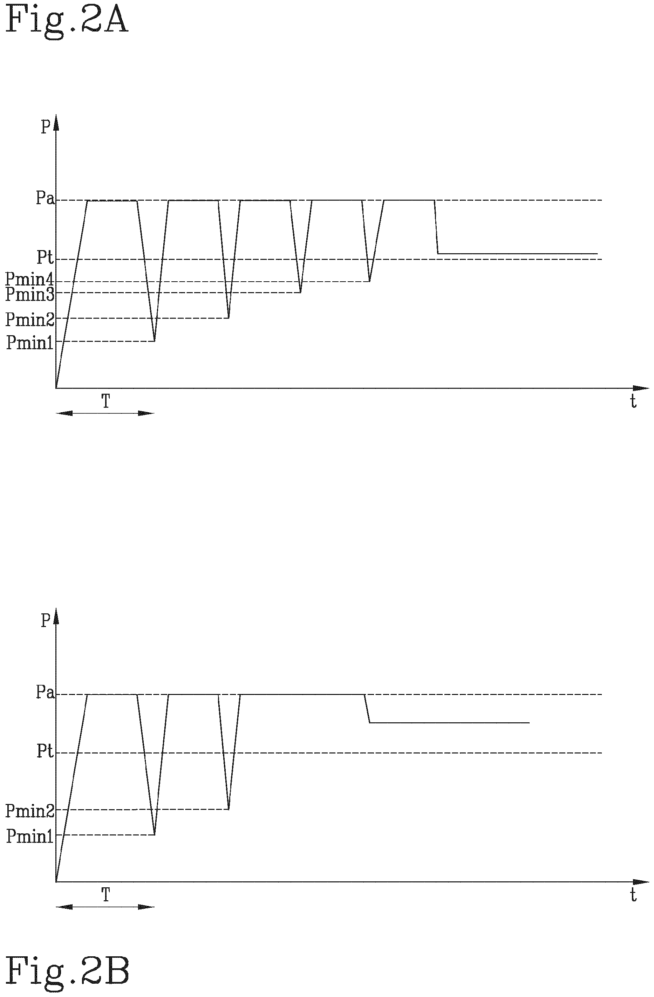

Thus, the pressure applied by the inflating module 300 has an intermittent trend, so as to determine an inflation cycle in which active stretches, where the air feed line 200 is open, are alternated with passive stretches, where the air feed line 200 is interrupted. Figures 2A and 2B show, by way of example, a pressure trend during an inflation cycle. The inflating module 300 supplies the tyre P with pressurized air intermittently at the feed pressure Pₐ (without considering feed line load losses on the feed line); the detected pressure trend is therefore cyclic, varying between pressure maximums (equal to the feed pressure Pₐ) and pressure minimums. In particular, in an inflation cycle, a plurality of pressure minimums Pₘᵢₙ₁, Pₘᵢₙ₂, Pₘᵢₙ₃, Pₘᵢₙ₄ follow each other in succession. When the pressure detected reaches the target value Pt, inflation stops (as illustrated in Figure 2A). If the air supply at the feed pressure Pₐ does not stop correctly for any reason, a safety module 700 is configured to come into operation to interrupt the air supply (as illustrated in Figure 2B).

According to a further aspect of this disclosure, the inflating device 100 also comprises a distribution valve 400 located on the feed line 200 downstream of the inflating module 300 and operable to allow or prevent the air flow from the inflating module 300 to the tyre P. Preferably, the distribution valve 400 can be operated by means of a pedal.

In other words, the distribution valve 400 is a valve which can be controlled, for example by an operator, to inflate the tyre P. Through the distribution valve 400, the operator can monitor the pressure in the tyre P increasing gradually until it reaches the desired value. In this situation, the operator can release the pedal to interrupt the supply of air by closing the distribution valve 400. Figure 1A shows an inflating device 100 in which the distribution valve 400 is located downstream of the inflating module 300, whilst Figure 1B shows an inflating device 100 in which the distribution valve 400 is located upstream of the inflating module 300, downstream of the air feed source F.

The inflating device 100 comprises an auxiliary safety module 700. The auxiliary safety module 700 comprises a secondary valve 500. The secondary valve 500 is located on the air feed line 200, downstream of the inflating module 300. In particular, the secondary valve 500 is located downstream of the distribution valve 400. The secondary valve 500 is movable between a closed position, where it prevents air from flowing in the feed line 200 between the secondary valve 500 and the tyre P, and an open position, where it allows the air to flow.

The auxiliary safety module 700 comprises a pressure sensor 600, configured to detect a pressure value and preferably connected to the inflating module 300 downstream and to the secondary valve 500 upstream.

The auxiliary safety module 700 comprises a control unit 800, connected to the pressure sensor 600 to receive the pressure value detected. The control unit 800 comprises a memory and a processor and is programmed to control the secondary valve 500 as a function of the pressure value detected by the pressure sensor 600.

It should be noted that the inflation cycle includes active stretches alternated with passive stretches, between which the pressure periodically adopts a minimum value. The control unit 800 is able to recognize the minimum values in the inflation cycle. In particular, the control unit 800 compares the detected pressure value with a threshold pressure value. Responsive to a pressure value which is less than the threshold pressure, for each detected pressure value less than the threshold pressure value, the control unit compares a pressure value Pₙ, detected at a given instant with a pressure value Pₙ₋₁, detected at a preceding instant. For each pressure value Pₙ less than the pressure value Pₙ₋₁, the control unit is programmed to determine the passive (or negative or descending) stretches of the pressure detected, and for each pressure value Pₙ greater than the pressure value Pₙ₋₁, the control unit is programmed to determine the active (or positive or ascending) stretches of the pressure detected. That way, the control unit recognizes the minimum pressure values between the active stretches and the passive stretches. The control unit 800 is also programmed to assign a cycle time to the period between two consecutive pressure minimums and to compare the cycle time T with a reference time value contained in the memory.

In particular, the inflating device 100 (more specifically, the auxiliary safety module 700) comprises a counter configured to count up to a time equal to the reference time value and also configured to reset its count each time the control unit finds the minimum pressure value in the inflation cycle. On reaching the reference time, the control unit 800 switches the secondary valve 500 to the closed position. That way, tyre inflation is interrupted when the pressure detected exceeds a threshold value for a length of time greater than the reference time.

In particular, the secondary valve 500 comprises a coil, a spring and an internal member configured to interconnect ducts of the secondary valve 500; the coil may be traversed by current so as to generate a magnetic field which displaces the internal member and overcomes the force exerted by the spring. Thus, in an unpowered condition, the spring keeps the secondary valve 500 closed by exerting a force on the piston. When the secondary valve 500 is traversed by current, the internal member is displaced, overcoming the force exerted by the spring and opening the secondary valve 500 to allow air to pass. Thus, the control unit 800 drives the opening of the secondary valve 500 by controlling the electrical power supply to the secondary valve 500.

Also an object of this disclosure is a method for controlling a process for inflating a tyre P, implemented by an inflating device 100 comprising an air feed line 200 configured to allow air to flow from an air feed source F to the tyre P, and an inflating module 300 which is operatively interposed between the feed source F and the tyre P.

The inflating module 300 comprises a primary valve 301, located on the air feed line 200 and movable between a closed position, where it prevents air from flowing through the feed line 200 into the tyre P, and an open position, where it allows the air to flow.

The inflating module 300 also comprises a first cylinder 302a and a second cylinder 302b, both operatively connected to the primary valve 301. The first cylinder 302a is configured to cause the primary valve 301 to open while the second cylinder 302b is configured to cause the primary valve 301 to close.

The first and the second cylinder 302a and 302b are fed, respectively, by a first branch 201a, extending from the feed line 200 at a point upstream of the primary valve 301, and by a second branch 201b, also extending from the feed line 200 at a point upstream of the primary valve 301.

The inflating module 300 also comprises a shutoff valve 303, located on the first branch 201a and movable between a closed position, where it occludes the first branch 201a to prevent fluid communication between the first cylinder 302a and the feed line 200, and an open position, where it allows fluid communication.

The inflating module 300 also comprises a control leg 202 configured to allow air to be fed to the shutoff valve 303 from a point in the feed line 200 downstream of the primary valve 301. The supply of air switches the shutoff valve 303 from the open position to the closed position when a predetermined pressure value is exceeded. The shutoff valve 303 is a regulatable valve and comprises a flow chamber, connected to the control leg 202, and a regulating spring, configured to regulate the closing of the valve itself.

The inflating module 300 also comprises a relief duct 201a', extending from the first branch 201a between the shutoff valve 303 and the first cylinder 302a and configured to gradually discharge air from the first cylinder 302a to the outside atmosphere when the shutoff valve 303 is closed. In particular, to gradually discharge the air from the first cylinder 302a, the inflating module 300 may comprise a throttle 304 or a plurality of throttles 304 mounted progressively in series along the relief duct 201a' (as illustrated by way of example in Figures 1A and 1B).

The inflating device 100 comprises a pressure sensor 600 for detecting a pressure value downstream of the inflating module 300 and upstream of the secondary valve 500 and a control unit 800, connected to the pressure sensor 600 for receiving the pressure value detected. The control unit 800 comprises a memory and a processor and controls the secondary valve 500 as a function of the pressure value detected by the pressure sensor 600.

Preferably, the method for controlling an inflating process is implemented by an inflating device 100 as described in the foregoing.

The method for controlling an inflating process comprises a step of connecting the feed line 200 to the air source F - for example, to a compressor - and a step of feeding air to the first cylinder 302a through the first branch 201a and to the second cylinder 302b through the second branch 201b so as to move the primary valve 301 to the open position.

Since both cylinders 302a, 302b are fed simultaneously, the first cylinder 302a, which is larger in cross section than the second cylinder 302b, applies a greater force on the primary valve 301 and keeps it at the open position.

The method comprises a step of feeding air to the shutoff valve 303 through the control leg 202.

In particular, when the primary valve 301 is at the open position and the pressurized air flows from the feed source F to the tyre P, some of the air feeds the control leg 202 and reaches the shutoff valve 303 through the flow chamber. In this situation, the method comprises a step of measuring the pressure of the air entering the tyre P, that is to say, the pressure of the air flowing in the feed line 200, and a step of comparing this value with the predetermined value. Next, the method comprises a step of driving the shutoff valve 303 from the open to the closed position based on the measurement performed.

If the value measured is greater than the predetermined value, the pressure of the air flowing in the control leg 202 is able to overcome the resistance of the spring of the shutoff valve 303, thus closing the valve to prevent air from flowing into the first cylinder 302a.

In this situation, the method also comprises a step of continuing to feed air to the second cylinder 302a to switch the primary valve 301 from the open position to the closed position so as to interrupt air feed to the tyre P.

In particular, the moment the shutoff valve 303 closes, the air present in the first cylinder 302a starts flowing out into the outside atmosphere while the air feed line 200 is still in fluid communication with the tyre P through the primary valve 301. In this situation, the method comprises a step of allowing air in the first branch 201a, to flow from the first cylinder 302a to the relief duct 201a', where the plurality of throttles 304 or the constrictive member 305 allow the air to be discharged into the outside atmosphere gradually.

The plurality of throttles 304 act as resistance or barrier to the air flowing out of the relief duct 201a' so as to slow its egress. By slowing the egress of the air from the first cylinder 302a, it is possible to keep the primary valve 301 open for longer so as to increase the time in which the air is supplied to the tyre P. In effect, in this situation, the second cylinder 302b, fed continuously by the second branch 201b, is unable to overcome the pressure applied by the first cylinder 302a, allowing the primary valve 301 to remain at the open position for longer and thus reducing the number of inflating cycles needed to completely inflate the tyre P.

The primary valve 301 remains at the open position until the second cylinder 302b overcomes the resistance of the first cylinder 302a. In this situation, the primary valve 301 is closed and feed to the tyre P is interrupted.

Downstream of the primary valve 301, in the feed line 200 and in the control leg 202, the pressure gradually decreases until reaching a value which is smaller than the predetermined value. In this situation, the air flowing in the control leg 202 is no longer able to overcome the resistance of the spring of the shutoff valve 303, which thus returns to the open position. Since the shutoff valve 303 is at the open position, the air from the feed source F is able to flow into the first branch 201a which can thus start feeding the first cylinder 302a again, and the latter, being larger in volume than the second cylinder 302b, overcomes the resistance applied by the second cylinder 302b and switches the primary valve 301 to the open position so as to allow air to be fed to the tyre P again for another inflating cycle.

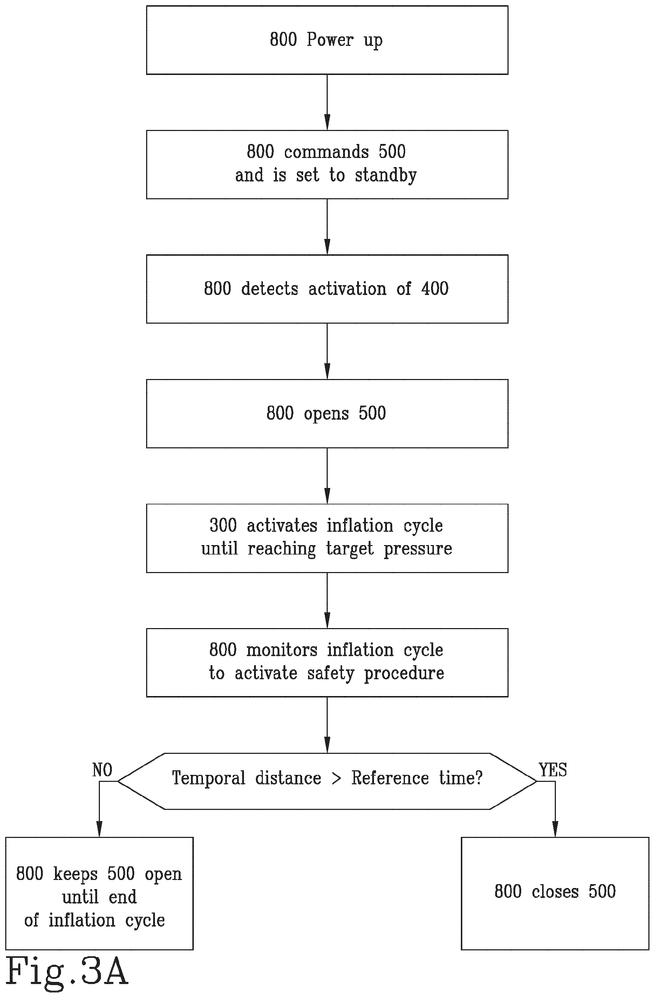

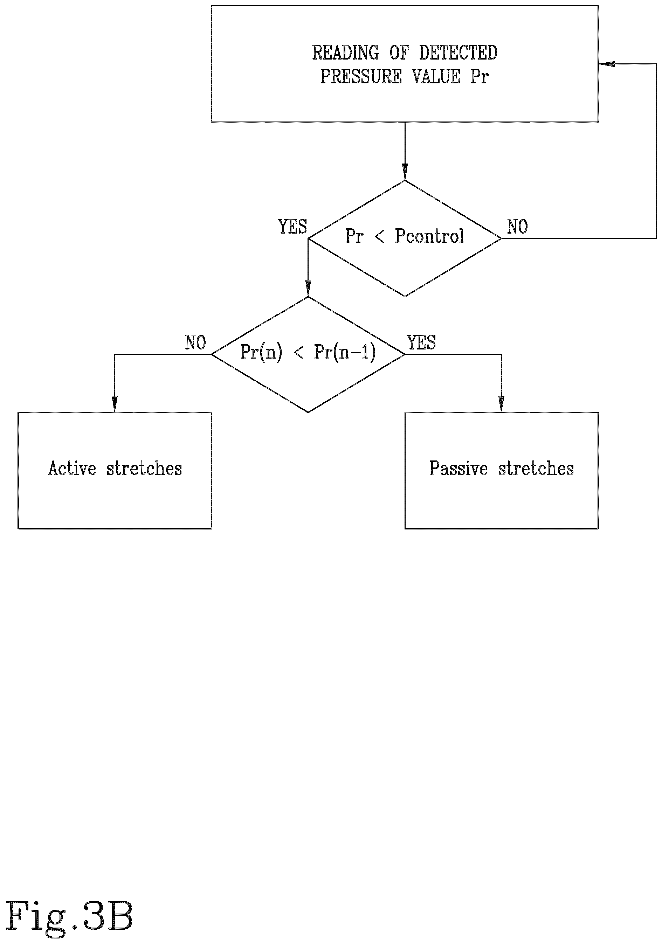

Figure 3A shows an example of an operating sequence of the inflating device 100. First of all, the control unit 800 is powered up. Responsive to the switching from the unpowered to the powered configuration, the control unit 800 preferably commands the secondary valve 500 to open and close a plurality of times in succession (to provide an acoustic indication that the secondary valve 500 is activated and deactivated correctly) and is set to standby, ready to detect any variation in the signal of the pressure sensor 600. When the control unit 800 detects an increase in the pressure sensed by the pressure sensor 600, it detects whether the distribution valve 400 has been opened (for example, by an operator operating a pedal) and commands the secondary valve 500 to open. That way, the air duct through the auxiliary safety duct 700 is opened and the inflating module 300 starts the inflation cycle to inflate the tyre P. During inflation of the tyre P, the control unit 800 monitors the inflation cycle of the inflating module 300 by activating the safety procedure; in particular, in the safety procedure, the control unit 800 starts the procedure for finding the minimum pressure (represented in Figure 3B). The inflating module 300 is configured to stop the cycle when the pressure in the tyre reaches the target pressure value. In the safety procedure, the control unit 800 checks the temporal distance between two consecutive pressure minimums. When the temporal distance between two consecutive pressure minimums is greater than the reference time value, the control unit 800 commands the secondary valve 500 to close; otherwise it keeps the secondary valve 500 open until the inflating module 300 completes the inflation cycle, that is to say, until the pressure detected at a pressure minimum reaches the target pressure value. In particular, in the safety procedure, the control unit 800 starts the timer counting and stops and resets it each time it finds a pressure minimum. If the count by the counter reaches the reference time (without the control unit 800 having found a pressure minimum), the control unit 800 commands the secondary valve 500 to close so as to stop the air from flowing into the tyre P.

In an embodiment, the control unit 800 determines whether to close the secondary valve 500 or keep it open when the counter reaches the reference time, based on the pressure detected by the pressure sensor 600: if the pressure detected is greater than a predetermined threshold (greater than the target pressure value of the inflating module 300), the secondary valve 500 is closed, otherwise it is kept open.

In an embodiment, the control unit 800 is configured to identify (automatically) a moment when the wheel with the tyre P is disconnected from the inflating device 100; in particular, responsive to the pressure sensor 600 detecting a pressure which is substantially equal to the ambient pressure value, the control unit recognises that the wheel with the tyre is disconnected from the inflating device 100. On recognizing the disconnection, the control unit 800 closes the secondary valve 500 and is set to the standby condition.

Thus, it is noted that the pressure is detected in two readings; the purpose of the first reading is to check that the air in the tyre P has reached the target pressure value Pt; the purpose of the second reading is to check that during the inflation cycle, no air is supplied for more than a preset threshold time at a high pressure (the expression "high" meaning a pressure greater than a predetermined pressure); preferably independently of the air pressure in the tyre P.

With regard to the first reading, various embodiments are possible. For example, the first reading may be performed by the pneumatic circuit of the inflating device 100 (that is, by the inflating module 300) without the aid of a pressure sensor proper (because the circuit of the inflating module 300 itself is configured to supply a target air pressure Pt). Alternatively, the first reading may be performed by a pressure sensor proper. Such a pressure sensor may be the self-same pressure sensor 600 or the pressure sensors may be distinct. For example, these readings may be performed by the same pressure sensor if the inflating module 300 and the auxiliary safety module 700 are integrated with each other. These readings may be performed by two distinct pressure sensors if the inflating module 300 and the auxiliary safety module are distinct modules.

## Claims

1. An inflating device (100) for inflating a tyre, comprising:
- an air feed line (200), configured to allow air to flow from an air feed source (F) to the tyre (P) in an inflating direction;
- an inflating module (300), interposed between the feed source (F) and the tyre (P) and including:
a primary valve (301), located on the air feed line (200) and movable between a closed position, where it prevents air from flowing into the tyre (P), and an open position, where it allows the air to flow;
a first branch (201a) extending from the air feed line (200) at a point upstream or downstream of the primary valve (301) in the inflating direction;
a shutoff valve (303), located on the first branch (201a) and movable between a closed position and an open position, to connect the first branch (201a) to the primary valve (301), to switch it between the open position and the closed position;
a control leg (202), configured to allow feeding air to the shutoff valve (303) from a point on the feed line (200), the feeding of air causing the shutoff valve (303) to switch from the open position to the closed position in response to the predetermined pressure value being exceeded;
a relief duct (201a'), extending from the first branch (201a) and configured to gradually discharge air to the external atmosphere when the shutoff valve (303) is at the closed position;
- an auxiliary safety module (700), including:
a secondary valve (500), located on the air feed line (200), downstream of the inflating module (300) and movable between a closed position, where it prevents air from flowing in the feed line (200) between the inflating module (300) and the tyre (P), and an open position, where it allows the air to flow;
the device being **characterized in that** the auxiliary safety module (700) includes:
a pressure sensor (600) configured to detect a pressure value downstream of the inflating module (300);
a control unit (800) including a memory and a processor and programmed to control the secondary valve (500) as a function of the pressure value detected by the pressure sensor (600).

2. The inflating device (100) according to claim 1, configured for inflating the tyre according to an inflation cycle, wherein the control unit (800) is programmed to control the secondary valve (500) as a function of a trend of the inflation cycle.

3. The inflating device (100) according to claim 2, wherein
the inflating module (300) is configured to apply pressure intermittently, so as to determine the inflation cycle in which active stretches, where the air feed line (200) is open, are alternated with passive stretches, where the air feed line (200) is interrupted;
the memory includes a reference time value;
the control unit (800) is programmed to control the secondary valve (500) as a function of the trend of the inflation cycle and of the reference time.

4. The inflating device (100) according to claim 3, wherein, during the inflation cycle, the pressure cyclically adopts a minimum value and the control unit (800) processes the detected pressure values to find the instant at which the pressure adopts the minimum value.

5. The inflating device (100) according to claim 4, comprising a counter, configured to count up to a time equal to the reference time value and to reset its count each time the control unit (800) finds the minimum pressure value in the inflation cycle, wherein the control unit (800) is configured to switch the secondary valve (500) to the closed position on reaching the reference time.

6. The inflating device (100) according to claim 4 or 5, wherein the control unit (800) is programmed for:
- receiving the pressure value detected by the pressure sensor (600);
- comparing the detected pressure value with a control pressure value;
- responsive to detecting a pressure value lower than the control pressure value, comparing a pressure value Pₙ, detected at a given instant with a pressure value Pₙ₋₁, detected at a preceding instant;
- for each pressure value Pₙ which is less than the pressure value Pₙ₋₁, deriving the passive stretches of the pressure detected;
- responsive to a pressure value Pₙ which is greater than Pₙ₋₁, deriving the minimum pressure value;
- for each pressure value Pₙ which is greater than the pressure value Pₙ₋₁, deriving the active stretches of the pressure detected.

7. The inflating device (100) according to any one of claims 3 to 6, wherein the control unit is programmed to derive a cycle time (T) and to set the reference time value as a function of the cycle time (T) derived.

8. The inflating device (100) according to any one of the preceding claims, wherein the control unit (800) has an electrically powered configuration and an electrically unpowered one and, responsive to the switching between the unpowered configuration and the powered configuration, is programmed to command the secondary valve (500) to open and close a plurality of times in succession.

9. The inflating device (100) according to any one of the preceding claims, wherein the pressure sensor (600) is located upstream of the secondary valve (500) and the secondary valve (500) is normally closed.

10. The inflating device (100) according to any one of the preceding claims, wherein the control unit (800) is programmed to detect switching of the line (200) between an interrupted condition, in which a distribution valve (400) is closed and interrupts the line (200) between the air feed source (F) and the pressure sensor, and an open condition, in which the distribution valve (400) is open and puts the air feed source (F) in communication with the pressure sensor, and is programmed to move the secondary valve (500) from the closed position to the open position responsive to such switching.

11. The inflating device (100) according to claim 9 or 10, wherein the control unit has an operational configuration and an intervention configuration, in which it displaces the valve (500) to the closed position, the control unit being configured to remain in the intervention configuration until a reset signal is generated, and wherein
- the inflating device comprises a pushbutton, configured to generate the reset signal, or
- the inflating device comprises an indicator, configured to indicate a state of the control unit, distinguishing between the operational configuration and the intervention configuration.

12. The inflating device (100) according to any one of the preceding claims, wherein:
the inflating module (300) comprises a second branch (201b), extending from the air feed line (200);
the first branch (201a) extends from the air feed line (200) at a point upstream of the primary valve (301);
the shutoff valve (303) is located on the first branch (201a) or on the second branch (201b) and is movable between a closed position and an open position, to connect the first branch (201a) or the second branch (201b) to the primary valve (301), to switch it between the open position and the closed position; and
the control leg (202) is configured to allow air to be fed to the shutoff valve (303) from a point in the feed line (200) downstream of the primary valve (301) in the inflating direction,
wherein the inflating module (300) includes:
a first cylinder (302a), operatively connected to the primary valve (301) and fed by the first branch (201a), the first cylinder (302a) being configured to cause the primary valve (301) to open,
a second cylinder (302b), operatively connected to the primary valve (301) and fed by the second branch (201b), the second cylinder (302b) being configured to cause the primary valve (301) to close,
wherein:
- the shutoff valve (303) is located on the first branch (201a) and when it is at the closed position, it occludes the first branch (201a) to prevent fluid communication between the feed line (200) and the first cylinder (302a), and when it is at the open position, it allows fluid communication, in order to switch the primary valve (301) between the open position and the closed position, and
- the relief duct (201a'), extends between a connection of the shutoff valve (303) to the first cylinder (302a) and the atmosphere and is configured to gradually discharge air from the first cylinder (302a) to the outside atmosphere when the shutoff valve (303) is closed.

13. A method for controlling a process for inflating a tyre (P), wherein the inflating process is implemented by an inflating device (100) comprising:
- an air feed line (200), configured to allow air to flow from an air feed source (F) to the tyre (P);
- an inflating module (300), interposed between the air feed source (F) and the tyre (P) and including:
a primary valve (301), located on the air feed line (200) and movable between a closed position, where it prevents the air from flowing through the feed line (200) into the tyre (P), and an open position, where it allows the air to flow;
a first branch (201a) extending from the air feed line (200) at a point upstream or downstream of the primary valve (301) in the inflating direction;
a shutoff valve (303), located on the first branch (201a) and movable between a closed position and an open position, to connect the first branch (201a) to the primary valve (301), to switch it between the open position and the closed position;
a control leg (202), configured to feed air to the shutoff valve (303) from a point on the feed line (200) so as to switch the shutoff valve (303) from the open position to the closed position in response to the predetermined pressure value being exceeded;
a relief duct (201a'), extending from the first branch (201a) to gradually discharge air to the external atmosphere when the shutoff valve (303) closes;
- an auxiliary safety module (700), including:
a secondary valve (500), located on the air feed line (200), downstream of the inflating module (300) and movable between a closed position, where it prevents air from flowing in the feed line (200) between the secondary valve (500) and the tyre (P), and an open position, where it allows the air to flow;
- connecting the feed line (200) to the air source (F);
- feeding air through the first branch (201a) so as to move the primary valve (301) to the open position;
- feeding air to the shutoff valve (303) through the control leg (202);
- measuring a pressure value of the air entering the tyre (P);
- comparing the measured pressure value with a predetermined pressure value;
- in response to the comparison, driving the shutoff valve (303) between the open position and the closed position so that, if the pressure value is greater than the predetermined pressure value, the shutoff valve (303) is switched from the open position to the closed position;
- continuing to feed air to switch the primary valve (301) from the open position to the closed position so as to interrupt air feed to the tyre (P);
- discharging air to an outside atmosphere through an air passage in the relief duct (201a'),
**characterized in that** the auxiliary safety module (700) includes
a pressure sensor (600) configured to detect a pressure value downstream of the inflating module (300), and
a control unit (800), including a memory and a processor, and the method comprises the following steps:
- via the pressure sensor (600), detecting a pressure value downstream of the inflating module (300);
- driving the secondary valve (500) via the control unit (800) as a function of the pressure value detected by the pressure sensor (600).

14. The method according to claim 13, comprising the following steps:
- via the inflating module (300), applying pressure intermittently so as to determine the inflation cycle in which active stretches, where the air feed line (200) is open, are alternated with passive stretches, where the air feed line (200) is interrupted;
- via the control unit (800), driving the secondary valve (500) as a function of the trend of the inflation cycle and of the reference time contained in the memory of the control unit (800).

15. The method according to claim 14, wherein, during the inflation cycle, the pressure cyclically adopts a minimum value, the method including the following steps:
- via the control unit (800), processing the detected pressure values in order to find the instant in the cycle at which the pressure adopts the minimum value;
- via a counter, counting up to a time equal to the reference time value;
- via the control unit (800), switching the secondary valve (500) on reaching the reference time;
- resetting the count of the counter each time the control unit (800) finds the minimum pressure value in the inflation cycle.
